Europäisches Patentamt

European Patent Office

Office européen des brevets

(11) Publication number: **0 297 054 B1**

(12) **EUROPEAN PATENT SPECIFICATION**

(45) Date of publication of patent specification: **25.11.92**  (51) Int. Cl.⁵: **A23G  1/00**

(21) Application number: **88810433.8**

(22) Date of filing: **23.06.88**

(54) Method for homogeneizingly introducing water into chocolate or a chocolate replacement product.

(30) Priority: **26.06.87 CH 2409/87**

(43) Date of publication of application:
**28.12.88 Bulletin  88/52**

(45) Publication of the grant of the patent:
**25.11.92 Bulletin  92/48**

(84) Designated Contracting States:
**AT BE CH DE ES FR GB GR IT LI LU NL**

(56) References cited:
**EP-A- 0 135 768          FR-A- 1 501 537
FR-A- 1 511 030          FR-A- 2 318 589
GB-A- 2 113 969          JP-A-61 139 338
US-A- 1 859 240          US-A- 2 171 244
US-A- 2 287 838          US-A- 2 760 867
US-A- 2 883 286          US-A- 3 223 532
US-A- 3 232 765          US-A- 3 556 812
US-A- 4 446 166**

**CHEMICAL ABSTRACTS, vol. 103, no. 7, August 1985, pages 483-484, abstract no. 52968m, Columbus, Ohio, US**

**O. Fennema, Principles of Food Science, Part I, 1976**

**Bennet Concise Chemical & Technical Dic-**

tionary

**Hackh's Chemical Dictionary**

(73) Proprietor: **BATTELLE MEMORIAL INSTITUTE
7 route de Drize
CH-1227 Carouge/Genève(CH)**

(72) Inventor: **Giddey, Claude
59, Route de Chêne
CH-1208 Genève(CH)**
Inventor: **Dove, Georges
Ouai du Cheval Blanc 1
CH-1227 Carouge/GE(CH)**

(74) Representative: **Dousse, Blasco et al
7, route de Drize
CH-1227 Carouge/Genève(CH)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method for intimately and uniformly incorporating water into chocolate or a chocolate replacement product, i.e. a solid phase having a hydrophobic and lipophobic character. An example of a material with such properties is chocolate containing hydratable sugars, e.g. in the form of a mass or body of chocolate. Incorporating water into chocolate can modify some of its physical properties, e.g. its behavior under hot conditions.

It is well known that when a small quantity of water is uniformly incorporated to a body of chocolate, the resistance of the latter to heat improves and the chocolate has less tendency to soften and stick when the temperature exceeds 25-30°C.

Chocolate is usually composed of fatty substances (cocoa butter) containing, dispersed therein, non-fat substances such as cocoa substances (cellulose fibers, flavors, theobromine, etc.), sugars, proteins (e.g. milk proteins). In addition, other ingredients may also be present in chocolate, e.g. fruits, almonds, nuts, special flavors, liquors, etc.). The main chocolate phase (a continuous phase of lipophilic character) therefore comprises fat bodies and its melting temperature is generally rather low. Thus when this phase essentially consists of cocoa butter (a mixture of stearyl, oleyl, palmityl and linoleyl glycerides), it starts softening at already 28°C and the chocolate mass looses its strength and body. The mass does no longer "break" cleanly, it collapses and unpleasently sticks to the wrapper. Furthermore, cocoa butter blooming may eventually appear on the surface of the chocolate upon cooling, such blooms unpleasantly looking like moulds.

It has been thought to remedy these drawbacks in many fashions, for instance by selecting higher melting fats or, better, by attempting to locally disrupt the continuity of the fat phase in the chocolate so as to minimize the effects consecutive to the melting thereof on the overall property losses of the chocolate mass. Such disruption can be obtained by increasing the proportion in the mass of the high melting hydrophilic components, i.e. either by fully embedding the fat particles in the high melting components (phase inversion), which means that the fat phase becomes then entirely discontinuous or by building inside of the mass a high melting network structure which traps the fat therein, somewhat like a soaked sponge retains a liquid in its pores.

A network of this kind can result from the presence in the chocolate of some added water and its intimate dispersion therein.

For instance, patent, CH-A-410.607 (MARS) discloses a chocolate composition containing hydrophilic substances like dextrose, maltose, invert sugar, fructose, xylose, mannitol, sorbitol, etc... The chocolate articles cast with this composition are subjected to a moist atmosphere whereby they absorb an amount of water. This water absorbtion increases the volume of the hydrophilic components relative to that of the fat components and improves the heat resistance of the chocolate.

In patents CH-A-399,891 and 489,211, there is disclosed a method of incorporating during manufacture amorphous sugars to a chocolate composition. These sugars participate to the construction, upon water absorbtion, of a cross-linked structure which prevents the mass from collapsing when the temperature exceeds the melting temperature of the fats used for making the chocolate.

Moreover, in patent CH-A-409.603, there is described the direct incorporation of water into chocolate during the manufacturing stage. The amount of water is about 5% by weight of the composition and its addition leads to a rapid thickening of the molten mass (around 30°C), whereby it is no longer possible to directly cast chocolate articles by pouring the liquid into moulds. The hydrated composition must therefore be ground to a powder and the powder is sintered to forms under pressure. The compositions according to this method are typical inverted phase structure, i.e. structures in which the chocolate fat is substancially totally embedded in a matrix of high melting or non-fusible hydrophilic materials. Similar methods are disclosed in CH-A-405.908 and DRP 389 117. In US-A.2,760,867 water is incorporated in chocolate during manunufacture by using, in addition, a known emulsifier, e.g. lecithin. According to US-A-4,081,559 a quantity of sugar is added to chocolate such that, when water is ultimately added for providing a heat-resistant chocolate, an aquaous solution of sugar is produced which contains edible fats in emmulsion form.

According to another method disclosed in CH-A-519.858, the fats are incorporated in encapsulated form into the chocolate composition, this encapsulation being by means of microcapsules or vesicles of less than 2 mm formed of an edible non-liposoluble membrane; The resulting composition is a heat resistant chocolate.

Document FR-A.2,318.589 describes a technique for intimately incorporating water to the fat phase of a food composition, for exemple a chocolate composition, in which the following operations are performed: In a composition containing 15-35% of an edible fat and at least 40% of sugar by weight, there is emulsified a quantity of water sufficient to make 100%. Then the water is evaporated until separation of the fatty and aqueous phases occurs, so as to achieve an edible composition where moisture content does not exceed 5% by weight, and in which each individual fat globule is embedded is amorphous sugar (sugar glass). A composing of this kind resists temperature up to 65°C.

Japanese document No J60 027 339 discloses the preparation of a chocolate with a high water content; this is achieved by adding the water to the chocolate maintained at a temperature below 60°C.

According to Japanese document No J59 156 246, a chocolate containing a small quantity of water which is added to improve its structure is made by incorporating thereto hydrated ingredients such as glucose syrup, sucrose, invert sugar, starch, honey, sorbitol, etc... This technique allous incorporating from about 1,5 to 5% of water to the chocolate with no need to make an emulsion.

From the foregoing description of the prior art, it is obvious that many techniques have already been proposed to incorporate water into chocolate for the purpose of improving its behaviour in hot climate, however, since the addition of water leads to an extremely rapid thickening of the lipophilic mass, it is practically impossible to very finely and homogeneously distribute this water in the chocolate, and this is the reason why hydrated chocolate has, until now, a rather grainy texture which is undesirable. The present inventor has already proposed to cure the difficulty (see US-A 4,446,166) by first emulsifying the water in a solid fatty phase, then grinding this emulsion into a powder of very fine particles and finally dispersing these particles into a mass of molten chocolate. Since the solid fat phase embedding the water has sufficient thermal inertia, it is possible by means of this technique to homogeneously distribute the fat encapsulated water into the liquid chocolate mass before the melting of the encapsulating fat and before the trapped water is released from the particles.

Although this method is very sufficient, it has the drawback that the chocolate mass to be treated must be prepared with less fat than usual (since the remaining amount of fat is brought as the pulverized solid water emulsion); this may introduce undesirable preliminary manufacturing problems (new formulae, changes of viscosity of the conged chocolate, etc .). Therefore the present inventor searched for means with even better performance and making it possible in addition to avoid a late addition of fat as in the aforementioned technique. The present inventor reasoned on the principle that in order to homogeneously introduce a small or very small concentration of water in a non-water-miscible phase, i.e. a bulk or mass of material having a lipophilic character, one must first "dilute" this water in a relatively large volume of a medium compatible with this lipophilic phase (i.e. for instance the solid fat used in the technique of US 4,446,166); however this medium should not be a fat, for the reasons explained before, and because addition of foreign material should be minimized as much as possible. It was therefore tempting to use a gas as the "diluting medium". Indeed when a lipophilic phase is intimately mixed with a gas loaded with water, the gas can thereafter be eliminated easily (for instance by degassing) and only the water remains distributed in said lipophilic phase.

A "dilution" of water in a gas can be achieved by means of a foam wich may result, for instance, from the whipping of an aqueous solution of a foaming agent in the presence of air or a gas such as $N_2O$, $CO_2$ $N_2$ and mixtures thereof; according to a variant, the gas can be dissolved in the solution under pressure and, upon releasing suddenly the pressure, a foam of the gas in the solution is produced. On the other hand, the film of solution which constitutes the walls of the foam bubbles should preferably be compatible with the material of the lipophilic phase to be hydrated homogeneously; therefore, the foaming agent should preferably have, in addition to the normal hydrophilic groups which work to diminish the surface tension of the water, functions which can dissolve in the lipophilic phase or which, at the least, have definite compatibility with said lipophilic phase. A foaming agent of this kind, having simultaneously hydrophilic and lipophilic functional groups is sometimes called an amphipatic agent.

The method of the invention, which derives from the above reasoning, is summarized in claim 1. It is possible that the efficiency of the present method and the high degree of homogenization of the water in the lipophilic phase are related to the properties of the foaming agent, preferably an amphipatic agent, dissolved in the film of solution which forms the walls of the foam bubbles. Although the exact mechanism has not been discovered, it is probable that most of the molecules of the foaming agent are arranged in a direction perpendicular to this wall, the hydrophilic functions being dissolved therein and the lipophilic groups pointing away from the film toward the center of the bubbles. When the foam is mixed with the lipophilic mass, the lipophilic functional group of the foamer contact with this lipophilic phase and, as the bubbles break, the water of the film remain intimately dispersed therein because of the presence of said lipo-compatible functional groups which may stay dissolved in the lipophilic phase. When the lipophilic phase material is normally solid at ambient temperature, it is first melted by heating; then the foam is incorporated therein preferably from about 25 to 50°C and the blend allowed to cool, whereby it solidifies and the gas escapes.

The following documents (D) have been mentioned as the state of the art in the delivery procedure:

D1 = US-A-3 556 812 (The Quakers Oats)
D2 = US-A-4 446 166 (Battelle)
D3 = US-A-1 859 240 (Ross and Rowe)
D4 = FR-A-2 318 589 (Cadbury)
D5 = Chemical Abstracts, vol.103, No 7, Abstract number 52698 m
D6 = FR-A-1 511 030 (Perrin)
D7 = FR-A-1 501 537 (Nestlé)

D1 discloses the production of chocolate flavoured marshmallow. Marshmallow syrup is whipped and intermixed under pressure with an inert edible gas until the density of the mixture is approximately 44 ounces per gallon ( = 2.75 pounds/US gallon = 0.33 g/cm$^3$), chocolate is then uniformly injected into the mixture and is blended. In the present method, the density of the foam (0.05-0.2) distinguishes the claim from D1.

The object of D3 is to produce confections which have notable quantities of water in their finished composition (page 1, lines 1-3) so that the product has an increased shelf-life and superior eating qualities. On page 2, 1.131 - page 3, lines 1-28, it is stated that in the production of nougat, albumen is dissolved in water and then whipped ( = foam). This mixture is then introduced slowly into a syrup whereby beating is continued until maximum volume is obtained. Finally premelted fat in a liquid form is added.

The method of D3 teaches how to produce confections with notable quantities of water by using an emulsion of lecithin and water and whipped albumen in the production of nougat.

The object of D1 is to produce a chocolate flavoured marshmallow product containing a significant amount of chocolate (col.3, 1. 8-18). The problem involved in such a procedure is that the addition of such a high fat content material to marshmallow was thought to destroy the whipping properties of the mix (col.2, 1. 18-24) which would then give rise to a product without the spongy texture characteristics which are common to marshmallow. The method described in D1 overcomes this prejudice. D1 gives no indication how to produce a heat-resistant chocolate.

D2 has the object of incorporating water into chocolate in order to improve its heat resistance (same object as in the present application). However, the problem is solved in a different way; an emulsion of water is incorporated in cocoa butter, solidified, ground to a powder and dispersed into molten chocolate.

An object of D4 is to provide an improved shaped, heat resistant chocolate product (page 2, 1. 7-11). The solution proposed in claim 1 in combination with claims 6 and 7 suggests the formation of an aerated emulsion ( = foam) only after the lipophilic substance has been incorporated into the water (see example 1 on page 5).

D5 mentions the use of a water in oil emulsion to produce a solid chocolate containing high water content.

The aim of D6 is to find a method of producing chocolate mousse in a continuous and not discontinuous way (page 1, col.1).

The object of D7 is to produce a new alimentary product (chocolate) which is lighter than customary products and which does not stick in the mouth (page 1, col.1 first paragraph). The advantage of this product is that it has a lighter density than conventional products without this being visually detectable (page 1, col.1, 1. 12-23). The problem is solved by decreasing the density of the product; air is introduced into the lipophilic mixture.

The amphipatic foamers which are convenient in the method of the present invention include all foaming surfactants having, on one hand a hydrophilic functional end (cationic, anionic, or non-ionic) and, on the other hand, a hydrophobic and lipophilic group. These compounds of which there exist many from the prior art on detergents, surfactants and liposomes, include fatty acids derivatives, sulfonates, phosphonates, quaternary ammonium compounds, lipids phospholipids, sterols, esterified carbohydrates, polypeptides, vegetal and animal proteins with foaming properties, saponins, soaps, etc ...

When the phase to be thickened is the fatty phase of chocolate, there are used, naturally, edible surfactants such as soy protein foamers, lecithin, albumin, milk proteins, stearyl tartrate, carbohydrate (e.g. sucrose, lactose, glucose, fructose) esters, monoglycerides, and others. The requirements for such a surfactant are that it should provide a homogeneous foam of density 0.05 to 0.2 comprising bubbles of a size from about 0.1 to 100 $\mu$m diameter from a water solution of concentration about 0.1 to 30% by weight. Preferably the foam should have a moisture content from about 1 to 20% by volume

Embodying the method of invention can be performed as follows:

A chocolate composition with lipophilic character, is first prepared and brought to the liquid state by usual means and using usual ingredients. The mass can optionally be tempered, but this is not a must. Tempering means that cocoa-butter cristallization "germs" (crystallites) are generated within the liquid chocolate mass containing molten cocoa-butter, this is accomplished by temporarily cooling the molten mass, while subjecting it to a kneading effect, from about 30°C where it is liquid to 25-27°C; then it is brought back to 29-31°C. In an embodiment of the invention, the mass is tempered and, once again at 29-31°C, there is added thereto 0.2 to 1 part by volume of the foregoing aqueous solution foam; the mixture is stirred and kneaded for a few minutes to ensure homogeneous dispersion whereby it remains perfectly fluid for some time, then it is further processed while it is still fluid, for instance it is cast into moulds. The amount of foam to be added is calculated to correspond, depending on its concentration, to the incorporation of about 0,5 to 2% by weight of water to the chocolate. Generally, the gas or the air of the foam readily escapes afterwards from the liquid lipophilic mass. However, the trapped air or gas can be eliminated more quickly from the cast mixture by subjecting it to reduced pressure or by pressing it mechanically to produce a packing effect. Preferably, this degassing operation is carried out when the mass is still liquid or fluid so as to speed up the gas evolution. Then the mass is usually allowed to cool, for instance between 10 or 20%, whereby it sets and solidifies. However, in an embodiment the mass can be cooled to a highly viscous or thermal plastic state before degassing and then subjected to sudden reduced pressure which leads to expansion. This expanded structure is preserved after complete solidification and the presence of residual air or gas therein does not impede the homogeneous distribution of the water into the mass and the providing thereto of unusual heat resistance properties. The degree of homogeneous distribution of the water in the chocolate can still be further improved by storing it for several hours, after solidification by cooling, e.g. 12-24 hrs, at 27°C.

In addition to the heat resistance given to the chocolate, the method of the invention also markedly reduces the tendency to "fat blooming" after heat exposure during storage followed by cooling. Usually, this phenomenon appears as an unpleasant whitish rash on the surface of the chocolate due to the exudation of cocoa-butter and eventual recrystallization.

The foam to be used in the present invention can be of any kind within the foregoing property limits. It is prepared by usual means, for instance with an industrial high speed mixer or by whipping with a whip or in an industrial whipping apparatus.

Other ingredients than the required foaming agent can be incorporated to the solution used to make the foam. Among useful additional ingredients (to be used dissolved or as suspensions), the following can be recited: gums and carbohydrates which can retard (because of their hydrophilic character) the diffusion of the water of the foam into the lipophilic mass; sweetening agents, flavors, hydrophilic compounds (glycerol, propylene glycol, sorbitol, etc.) gluconic acid, liquors, etc...

It should be remarked that, although this invention has been first achieved using chocolate as the mass with a lipophilic character, it addresses also a variety of other food-products, e.g. fats or foods containing much fats) into which one whishes to incorporate aqueous solution of hydrophilic substances. Such hydrophilic substances include dyestuffs (e.g. cochenilla carmin), edible acids (citric acid, lactic acid, malic acid, tartaric acid, etc...) vitamins (vitamin C, vitamin $B_1$, etc...) antioxidants (benzoic acid), stabilizers, flavors and other edible alike products. Hence, according to the method of the invention, one can incorporate into fats hydrosoluble substances which are normally not compatible with said fats. For doing this, the hydrophilic substances are dissolved in the solution to be foamed, then the solution is beaten to a foam and the latter is intimately incorporated to the fat (in the liquid state), as indicated before in the case of the chocolate. Then, after cooling, the lipophilic phase (the fat for instance) sets to a solid. The fatty substances which can be thus modified by the invention's method comprise for instance edible fats, peanut butter, cow's butter, lard, etc...

The following practical example illustrates the invention.

An egg-albumin foam was prepared by whipping in air at room temperature a 20% by weight aqueous egg-white solution. The egg-white used was dried pulverized egg-white. Using 18 g of such a solution provided 400 ml of foam, density = 0,05; 3,5% (v/v) of water.

In another container provided with a stirrer-kneader was placed 1 kg of ordinary commercial milk-chocolate, in liquid form as taken from a conge apparatus. In the present example, the milk-chocolate essentially included the following ingredients by weight: fats 32% (cocoa-butter 26%, milk-fats 6%); non-fatty milk solids 11%; non-fat solids and other components of cocoa 29%; sugars 27%; residual moisture 0,4-0,6%. The chocolate is conged at a temperature of 55°C and is free flowing at this temperature. The one kg sample of chocolate was first tempered, i.e. it was temporarily cooled to 26°C which induced the formation of cocoa-butter crystallites, then it was reheated to 29,5°C. Under these conditions, the mass is still free flowing and, under agitation, the aforementioned albumin foam was added thereto in a matter of 15-30 sec, after which stirring was continued for a few minutes.

Then, without waiting longer, the mass was cast into moulds and the moulds were allowed to cool slowly according to usual technique. After one night's rest, the chocolate was removed from the moulds; its aspect was undistinguishable from control chocolate prepared from the same batch but with the foregoing water addition treatment.

The hydrated test chocolate and the control chocolate were submitted to a group of experienced tasters who were unable to discover substantial organoleptic differences between the two kinds of chocolate.

Several samples of the test chocolate prepared and cast as described above, and controls having the same composition but for the water of hydratation, were heated for 2 hrs at 37°C in a heated enclosure. Then the samples and controls were subjected to a hardness "penetration" test. In this test, a device with a vertically sliding needle is placed on the chocolate surface and the force necessary to drive the needle into the chocolate to a given depth (namely 3mm in the test) is measured. For the control samples the force was 6g whereas in the test sample the force was 58 g.

In another test, samples of test chocolate and controls were held at 50°C overnight in a heated enclosure. The test samples were not altered by the treatment, for instance under stress the bars broke cleanly as if the temperature were not over 20-25°C, and the broken surface was neat and dry. In contrast, the control had become viscous and collapsed completely.

## Claims

1. A method for producing chocolate or a chocolate replacement product including incorporating thereto, when in a molten state, water or aqueous solutions of hydrophilic substances, characterized by blending said molten chocolate or product with a foam of density 0.05-0.2 g/cm$^3$ consisting of fine air or gas bubbles dispersed in this water or solution by means of a foaming agent, then removing the air or gas from the blend.

2. The method of claim 1, in which the foam is obtained by whipping an aqueous solution of a foaming agent in the presence of air or a gas, or by pressure-dissolving this air or gas in the solution and releasing suddenly the pressure.

3. The method of claim 2, in which the foaming agent is an amphipatic compound comprising at least a hydrophilic group and a hydrophobic lipophilic group, and in which the presence of the lipophilic function of this group in the film of solution forming the walls of the foam bubbles in contact with the lipophilic material allows the water in the film to become intimately mixed with the lipophilic material as the foam dissolves therein and the gas progressively escapes.

4. The method of claim 1, in which the chocolate contains a fat and at least a sugar in the form of a hydratable mono- or oligosaccharide.

5. The method of claim 4, in which this sugar is lactose or glucose.

6. The method of claim 1, wherein the foam moisture content is from about 1 to 20% by volume, and there is added about 0.2 to 1 part of this foam for one part of lipophilic material.

7. The method of claim 1, in which the concentration of the foaming agent in the aqueous solution is 0.1 to 30% by weight.

8. The method of claim 1, in which the gas is selected from $N_2O$, $CO_2$ and $N_2$ and mixtures thereof.

9. The method of claim 1, in which the blending is brought about between from about 25 to 50°C.

10. The method of claim 1, in which the foaming agent is selected from the following substances: lipids, sterols, polypeptides foamers, animal and vegetal proteins with foaming properties, soja lecithin, saponins, esterified sugars, mono- and diglycerides, milk proteins, soap, cationic surfactants, anionic and non-anionic surfactants.

11. The method of claims 1 and 2, which results in raising the melting point of chocolate and increasing its resistance to fat blooming.

12. The method of claim 1, in which the chocolate is subjected to tempering before adding the foam therein.

13. The method of claim 1, in which the blend of chocolate and foam is allowed to cool until it solidifies, then the solid chocolate is stored for a period of a few hours at 27°C, whereby the distribution of the water in the solid is improved.

## Patentansprüche

1. Verfahren zur Herstellung von Schokolade oder eines Schokoladenersatzes einschließlich Einbringen von Wasser oder wässrigen Lösungen hydrophyler Substanzen in geschmolzenem Zustand gekennzeichnet durch Vermischen dieser geschmolzenen Schokolade oder des Produktes mit einem Schaum einer Dichte von 0,05 bis 0,2 g/cm3 bestehend aus feinen Luft- oder Gasbläschen , die in diesem Wasser oder dieser Lösung mit Hilfe eines Schäummittels dispergiert sind, und dann Entfernung der Luft oder des Gases aus dieser Mischung.

**2.** Verfahren nach Anspruch 1, bei dem der Schaum durch Schlagen einer wässrigen Lösung eines Schäummittels in Gegenwart von Luft oder einem Gas oder durch Drucklösung der Luft oder des Gases in der Lösung und plötzliches Entfernen dieses Druckes erhalten wird.

**3.** Verfahren nach Anspruch 2, bei dem das Schäummittel eine amphipatische Verbindung ist, die wenigstens eine hydrophile Gruppe und eine hydrophobe lipophile Gruppe aufweist und bei dem die Gegenwart der lipophilen Funktion dieser Gruppe im Film der Lösung, die die Wände der Schaumbläschen in Kontakt mit dem lipophilen Material bildet, es dem Wasser im Film erlaubt, innig mit dem lipophilen Material vermischt zu werden, wenn der Schaum sich darin löst und das Gas progressiv entweicht.

**4.** Verfahren nach Anspruch 1, bei dem die Schokolade ein Fett und wenigstens einen Zucker in Form eines hydrierbaren Mono-oder Oligosacharides enthält.

**5.** Verfahren nach Anspruch 4, bei dem dieser Zucker Laktose oder Glukose ist.

**6.** Verfahren nach Anspruch 1, bei dem der Schaumfeuchtegehalt von etwa 1 bis 20 Vol.% ist und etwa 0,2 bis 1 Teil dieses Schaumes für einen Teil des lipophilen Materials zugesetzt wird.

**7.** Verfahren nach Anspruch 1, bei dem die Konzentration des Schäummittels in der wässrigen Lösung 0,1 bis 30 Gew.% ist.

**8.** Verfahren nach Anspruch 1, bei dem das Gas aus $N_2O$, $CO_2$ und $N_2$ und Mischungen davon ausgewählt ist.

**9.** Verfahren nach Anspruch 1, bei dem die Vermischung bei etwa 25 bis 50 ° C durchgeführt wird.

**10.** Verfahren nach Anspruch 1, bei dem das Schäummittel aus folgenden Substanzen ausgewählt wird: Lipiden, Sterolen, polypeptiden Schäummitteln, tierischen und pflanzlichen Proteinen mit Schäumeigenschaften, Soja Lecithin, Saponinen, esterifizierten Zuckern, Mono- und Digliceriden, Milchproteinen, Seife, kationischen Tensiden, anionischen und nicht anionischen Tensiden.

**11.** Verfahren nach Anspruch 1 und 2, bei dem der Schmelzpunkt der Schokolade erhöht wird und sein Widerstand gegen Fettausblühen vergrößert wird.

**12.** Verfahren nach Anspruch 1, bei dem die Schokolade vor dem Zusetzen des Schaumes einer Wärmebehandlung unterworfen wird.

**13.** Verfahren nach Anspruch 1, bei dem die Mischung von Schokolade und Schaum auskühlen gelassen wird, bis sie sich verfestigt, dann wird die feste Schokolade über einen Zeitraum einiger Stunden bei 27°C gelagert, wodurch die Wasserverteilung in der Masse verbessert wird.

## Revendications

**1.** Procédé pour produire du chocolat ou un produit de remplacement du chocolat comprenant, incorporé à lui lorsqu'il est dans un état fondu, de l'eau ou des solutions aqueuses de substances hydrophiles, caractérisé en ce qu'on mélange ce chocolat ou ce produit fondu avec une mousse de densité 0,05-0,2 $g/cm^3$ consistant en de fines bulles d'air ou de gaz dispersées dans cette eau ou cette solution au moyen d'un agent moussant, on enlève ensuite l'air ou le gaz du mélange.

**2.** Procédé selon la revendication 1, dans lequel la mousse est obtenue en fouettant une solution aqueuse d'un agent moussant en présence d'air ou d'un gaz ou en dissolvant sous pression cet air ou ce gaz dans la solution et en relâchant subitement la pression.

**3.** Procédé selon la revendication 2, dans lequel l'agent moussant est un composé amphipatique comprenant au moins un groupe hydrophile et un groupe lipophile hydrophobe et dans lequel la présence de la fonction lipophile de ce groupe dans le film de solution formant les parois des bulles de mousse en contact avec la matière lipophile permet à l'eau du film de se mélanger intimement avec la matière lipophile lorsque la mousse se dissout dedans et le gaz s'échappe progressivement.

**4.** Procédé selon la revendication 1, dans lequel le chocolat contient une graisse et au moins un sucre sous la forme d'un mono- ou oligosaccharide hydratable.

**5.** Procédé selon la revendication 1, dans lequel ce sucre est du lactose ou du glucose.

**6.** Procédé selon la revendication 1, dans lequel le contenu d'humidité de la mousse est d'environ 1 à 20 % en volume et il est ajouté environ 0,2 a 1 partie de cette mousse pour une partie de matière lipophile.

7. Procédé selon la revendication 1, dans lequel la concentration de l'agent moussant dans la solution aqueuse est de 0,1 à 30 % en poids.

8. Procédé selon la revendication 1, dans lequel le gaz est sélectionné parmi le $N_2O$, $CO_2$ et $N_2$ et des mélanges de ceux-ci.

9. Procédé selon la revendication 1, dans lequel le mélange est amené environ entre 25 et 50°C.

10. Procédé selon la revendication 1, dans lequel l'agent moussant est choisi parmi les substances suivantes : lipides, stérols, polypeptides, les protéines animales et végétales à propriétés moussantes, lécithine de soja, saponine, sucres estérifiés, mono- et diglycérides, protéines du lait, savon, surfactants cationiques, surfactants anioniques et non anioniques.

11. Procédé selon les revendications 1 et 2 qui a pour effet d'élever le point de fusion du chocolat et d'augmenter sa résistance a l'inflorescence de graisse.

12. Procédé selon la revendication 1, dans lequel le chocolat est soumis au tempérage avant d'y ajouter la mousse.

13. Procédé selon la revendication 1, dans lequel le mélange de chocolat et de mousse est laissé refroidi jusqu'à ce qu'il se solidifie, ensuite le chocolat solide est stocké pour une période de quelques heures à 27°C, de sorte que la distribution de l'eau dans le solide est améliorée.